# EUROPÄISCHE PATENTSCHRIFT

(11) **EP 2 115 509 B1**
(45) Veröffentlichungstag und Bekanntmachung des Hinweises auf die Patenterteilung: **29.05.2019**
(21) Anmeldenummer: 08708218.6
(22) Anmeldetag: 25.01.2008
(51) Int. Cl.: G02B 6/38

(54) **STECKERTEILE FÜR EINE OPTISCHE STECKVERBINDUNG**
PLUG PARTS FOR AN OPTICAL PLUG CONNECTION
ÉLÉMENTS D'ENFICHAGE POUR UNE CONNEXION OPTIQUE PAR FICHES

(30) Priorität: 08.02.2007 CH 213072007; 19.04.2007 CH 643072007
(43) Veröffentlichungstag der Anmeldung: 11.11.2009
(73) Patentinhaber: Diamond SA, 6616 Losone (CH)
(72) Erfinder: FANTINI, Dionigi, I-21030 Ghirla (IT); BELLI, Sergio, I-28900 Verbania (IT)
(74) Vertreter: Hepp Wenger Ryffel AG
(86) Internationale Anmeldenummer: PCT/EP2008/050894
(87) Internationale Veröffentlichungsnummer: WO 2008/095798

(56) Entgegenhaltungen:
- WO-A-01/61813
- US-A1- 2005 213 892

## Beschreibung

Die Erfindung betrifft eine Steckerteil für eine optische Steckverbindung gemäss dem Oberbegriff von Anspruch 1. Weiterhin betrifft die Erfindung ein vormontiertes Steckergehäuse sowie eine Stifthalterung für ein solches Steckerteil. Sodann betrifft die Erfindung ein Verfahren zum Installieren eines Glasfasernetzes. Derartige Steckerteile, bei denen Steckerstifte mit Hilfe eines Federelementes axial federnd im Steckergehäuse gehalten sind, sind seit längerer Zeit bekannt und gebräuchlich. Bevorzugt sind dabei die Steckerstifte axial federnd bezogen auf das Steckergehäuse vorgespannt, wodurch bei einem in eine Buchse eingesteckten Steckerteil Lichtübertragung auch bei Toleranzabweichungen gewährleistet ist. Weiterhin ermöglichen diese Steckerteile ein Sicherstellen einer konstanten Druckkraft zwischen den beiden Stirnflächen der Steckerstifte einer optischen Steckverbindung.

In der WO 2004/001471 A1 ist beispielsweise ein gattungsmässig vergleichbares Steckerteil beschrieben, bei dem zum Erzeugen einer Vorspannung des Steckerstifts eine Schraubendruckfeder verwendet wird, die innerhalb einer Stifthalterung gelagert ist. Die Stifthalterung besteht aus zwei zusammensetzbaren Mantelteilen. Die Stifthalterung ist fest in einem Steckergehäuse verankert, wodurch eine Zugentlastung gewährleistet ist. Die Platzierung des Federelements am richtigen Ort zwischen Steckerstift und Stifthalterung hat sich in der Praxis als aufwendig erwiesen. Neben der verhältnismässig schwierigen Montierbarkeit des Steckerteils besteht ein weiterer Nachteil insbesondere darin, dass das Steckerteil wenig zur Verwendung für Einblas-Verfahren zum Versehen von Gebäuden und anderen Einrichtungen mit Lichtwellenleiter-Installationen geeignet ist.

Verfahren zum Installieren von Glasfasernetzen unter der Verwendung von Einblas-Techniken gewinnen seit jüngerer Zeit immer an grösserer Bedeutung. Mittels Einblasen von Lichtwellenleiter-Kabeln in bestehende, vorverlegte Röhrensysteme ist es möglich, Lichtwellenleiter auf einfache Art und Weise zu einem gewünschten Ort zu bringen (z.B. FTTH). Ein Einblas-Verfahren sowie eine Vorrichtung zum Einblasen von Lichtwellenleiter-Kabeln ist beispielsweise aus der US 6 572 081 B2 bekannt geworden. Die dort beschriebenen Lichtwellenleiter-Kabel verfügen an ihren Enden über spezielle Führungseinrichtungen, die beim Einblas-Vorgang den mechanischen Belastungen standhalten können. Nach Erreichen der Endposition beim Endkunden werden die Kabel mit Steckerteilen für optische Steckverbindungen ausgerüstet. Dazu werden beispielsweise unter Verwendung von Spleissverfahren werkkonfektionierte Pigtail an die nackten Faserenden der Lichtwellenleiter-Kabel befestigt, wobei zusätzlich platzraubende Schutztüllen eingebaut werden müssen.

Die EP 1 450 187 betrifft einen optischen Stecker mit einem gefederten Steckerstift. Dieser ist an einer Stifthalterung angeordnet, die von der Rückseite her in das Steckergehäuse eingeschoben werden kann. Das Federelement ist jedoch der Stifthalterung zugeordnet und durch eine Aussenhülse geschützt. Dies kompliziert die Vormontage und vergrössert den Aussendurchmesser der Stifthalterung.

Die US2005213892 offenbart ein Steckergehäuse, und die WO0161813 offenbart ein Verfahren zum Installieren eines Glasfasernetzes.

Es ist daher eine Aufgabe der Erfindung, die Nachteile des Bekannten zu vermeiden, insbesondere ein Steckerteil der eingangs genannten Art zu schaffen, das sich einfach herstellen lässt und sich durch eine einfache Montierbarkeit auszeichnet. Weiter soll das Steckerteil kostengünstig sein und somit beispielsweise für den Anwendungsbereich "Fiber to the Home" (FTTH) geeignet sein. Die Handhabung des Steckerteils bei dessen Montage soll hierzu einen feldmässigen Einsatz ermöglichen. Diese Aufgabe wird erfindungsgemäss mit einem Steckerteil gelöst, das die Merkmale in Anspruch 1 aufweist.

Der Steckerstift, in dem der Lichtwellenleiter gehalten ist, ist vorzugsweise fix in der Stifthalterung befestigt. Die Stifthalterung ist demnach zusammen mit dem Steckerstift axial federnd im Steckergehäuse gelagert. Vorteilhaft kann es dabei sein, wenn der Steckerstift bzw. die Stifthalterung unter axialer Vorspannung im Steckergehäuse gelagert ist. Das Federelement kann in Lagerstellung am Aussenmantel der Stifthalterung angeordnet sein, wodurch geeignete Federelemente eingesetzt werden können, die einfach in der Handhabung bei der Montage sind. Das Federelement kann derart an das entsprechende Lager im Steckergehäuse angepasst sein, dass es vor dem Einschieben der Stifthalterung in das Steckergehäuse auf einfach Art und Weise vormontierbar ist. Beim Federelement kann es sich beispielsweise um eine Schraubendruckfeder handeln. Das Federelement könnte beispielsweise auch hülsenartig ausgebildet sein und skelettartig unterbrochen sein. Eine skelettartige Federanordnung ist beispielsweise aus der CH 689 316 A5 bekannt geworden, bei der jedoch die Feder einstückig in der Stifthalterung integriert ist. Selbstverständlich sind aber auch noch andere Federtypen vorstellbar.

In einer ersten Ausführungsform kann im Lager eine wenigstens teilweise umlaufende Schulter angeordnet sein, mit der der Federweg des Federelements in Richtung der Längsmittelachse begrenzt ist und die einen Federaufnahmeabschnitt für das Federelement definiert. Eine im Bereich der Lagerinnenseite des Steckergehäuses vorgesehene Schulter kann direkt oder indirekt einen Anschlag für das Federelement bilden. Bezogen auf die entgegengesetzte Richtung kann das Federelement durch ein Sicherungselement gesichert sein, das in das Lager einsetzbar ist und durch Kraft und/oder Formschluss im Lager fixierbar oder fixiert ist. Auf diese Art und Weise kann das Sicherungselement einfach an die Lagerinnenseite des Lagers des Steckergehäuses befestigt werden. Ein weiterer Vorteil dieser Anordnung ist, dass die Vorspannung des Federelements variabel einstellbar ist. Je nachdem wie tief das separate Sicherungselement im Lager eingesetzt ist, wird die Schraubendruckfeder verschieden stark zusammengedrückt.

Vorteilhaft kann es sein, wenn das Federelement durch eine Klemmhülse gesichert ist, die über die kabelseitige Öffnung in Einschieberichtung in das Lager einsetzbar ist. Die Verwendung von Klemmhülsen als Sicherungselemente gewährleisten einen ausreichend sicheren Sitz der Klemmhülse im Lager des Steckergehäuses. Alternativ wäre es auch denkbar, als Sicherungselement eine Hülse zu verwenden, die mit dem Steckergehäuse in der Lagerinnenseite durch Klebung verbunden ist.

In einer alternativen Ausführungsform kann das Federelement durch eine Klemmhülse im Lager im Steckergehäuse gesichert sein, die über die steckerseitige Öffnung in Gegenrichtung zur Einschieberichtung einsetzbar ist. Ein derartiges Einsetzen der Klemmhülse von vorne hat den Vorteil, dass eine vielseitige Verwendbarkeit des Steckergehäuses ermöglicht wird. Ersichtlicherweise wird somit die Klemmhülse einerseits und die Stifthalterung mit dem Steckerstift andererseits in entgegengesetzten Richtungen in das Steckergehäuse eingesetzt bzw. eingeschoben. Da in dieser Anordnung das Steckergehäuse (z.B. eine entsprechende Schulter in der Lagerinnenseite) einen Anschlag für die Gegenrichtung zur Einschieberichtung bilden kann, ist eine vorteilhafte zugfeste Verankerung erreichbar. Ein weiterer Vorteil besteht darin, dass die jeweiligen Komponenten einfach gestaltet und hergestellt werden können. Sodann kann die Vormontage des Steckerteils unter Verwendung entsprechender Montagevorrichtungen einfach automatisiert werden.

Die Klemmhülse kann vorzugsweise an ihrem Aussenmantel Erhebungen und/oder Aussparungen enthalten, welche durch plastische Verformung formschlüssig in die Lagerinnenseite des Lagers eingreifen. Die Lagerinnenseite kann dabei im korrespondierenden Federaufnahmeabschnitt zylindrisch ausgebildet sein. Am Aussenmantel der Klemmhülse können z.B. wenigstens zwei umlaufende Zähne angeordnet sein, die gegenüber dem Durchmesser des Aussenmantels hervorragen. Hinter jedem Zahn kann jeweils eine umlaufende, nutartige Einbuchtung angeordnet sein, in die die durch plastische Verformung hervorgerufenen Materialwülste der Lagerinnenseite des Steckergehäuses aufnehmbar sind. Diese Anordnung gewährleistet einen besonders sicheren und festen Sitz der Klemmhülse im Lager des Steckergehäuses.

Das Steckergehäuse kann wenigstens im Bereich der Lagerinnenseite aus Kunststoff und die Klemmhülse aus Metall bestehen. Bevorzugt wird dabei ein vergleichsweise weiches Metall wie z.B. Bronze oder Neusilber verwendet, das beim Einsetzvorgang ebenfalls leicht verformbar ist. Solche Materialkombinationen sind dann vorteilhaft, wenn beim Einsetzvorgang die vorgängig beschriebene plastische Verformung zum Bilden eines zusätzlichen Formschlusses auftreten soll.

In einer weiteren Ausführungsform kann die Lagerstellung der Stifthalterung im Steckergehäuse durch Rastmittel vorgegeben sein. Solche Rastverbindungen zeigen sich durch einfache Handhabung aus. Die Rastmittel können separate Bauteile sein, die je nach Ausgestaltung des Steckergehäuses entweder über die steckerseitige oder die kabelseitige Steckeröffnung in den Federaufnahmeabschnitt des Lagers einführbar sind.

Besonders vorteilhaft kann es sein, wenn ein Sprengring im Lager angeordnet ist und wenn die Stifthalterung über eine Nut verfügt, die zum Festlegen der Lagerstellung mit dem Sprengring rastend in Eingriff bringbar ist. Der Sprengring kann dabei wenigstens in eine Richtung, ausgehend von seiner Ruhestellung bevorzugt nur in eine Richtung verschiebbar im Lager gelagert sein. Die Verschiebung in die Gegenrichtung wäre dann durch einen entsprechenden Anschlag ausgeschlossen. Dieser Anschlag kann beispielsweise durch die vorgenannte umlaufende Schulter oder durch die Klemmhülse gebildet sein. Als Sprengring können handelsübliche oder speziell angefertigte Ringe aus Federstahl verwendet werden, die zum Zulassen einer radialen Aufweitung unterbrochen sind. Anstatt Sprengringen könnten grundsätzlich aber auch andere Rastmittel vorgesehen werden, die radial aufweitbar sind.

Zwischen dem Sprengring und dem Federelement kann eine axial im Lager verschiebbare Distanzhülse angeordnet sein. Diese Distanzhülse kann einen Anschlag für das Federelement bilden.

Für eine zugfeste Gestaltung des Steckerteils kann die Distanzhülse innen einen konischen Abschnitt aufweisen, der als Auflaufflanke für den Sprengring dient. Beim Ausüben einer Zugkraft auf das Lichtwellenleiter-Kabel kann der Sprengring auf den konischen Abschnitt auflaufen, wodurch der Sprengring radial sich leicht zusammenzieht und so die Rastverbindung zur Stifthalterung verstärkt. Mit dieser Anordnung kann ein ungewünschtes Herausziehen bzw. eine Demontage der Stifthalterung aus dem Steckergehäuse auf einfache Art und Weise verhindert werden.

Alternativ zur vorgenannten Ausführungsform, wäre es aber auch vorstellbar, den Sprengring der wenigstens teilweise umlaufenden Schulter zuzuordnen. In diesem Fall könnte der Sprengring wenigstens in einer Ruhestellung direkt an der Schulter anliegen. Selbstverständlich wäre aber auch hier der Einsatz einer Distanzhülse vorstellbar.

Besonders vorteilhaft kann die Klemmhülse oder die Distanzhülse eine umlaufende Einbuchtung oder eine umlaufende Nut zur Aufnahme oder Anlage des Sprengrings aufweisen, welche derart dimensioniert ist, dass sie eine Aufweitung des Sprengrings beim Einschiebe-Vorgang der Stifthalterung in das Steckergehäuse zum Herstellen der Lagerstellung zulässt. Die Einbuchtung kann an einem dem Sprengring zugewandten Ende der Klemmhülse oder einem dem Sprengring zugewandten Ende der Distanzhülse angeordnet sein.

Die Stifthalterung kann über einen Positionierabschnitt und das Steckgehäuse kann über einen mit dem Positionierabschnitt in Wirkverbindung stehende Positionieranordnung verfügen, wodurch die Stifthalterung verdrehgesichert im Lager des Steckergehäuses gehalten ist oder gehalten werden kann.

Die Stifthalterung kann im Wesentlichen rotationssymmetrisch ausgebildet sein, wobei jedoch zum Bilden einer Verdrehsicherung wenigstens der zylindrische Aussenmantel der Stifthalterung durch einen vorzugsweise planen Anschnitt unterbrochen ist. Das Steckergehäuse kann dabei entsprechend abschnittsweise innenseitig komplementär ausgestaltet sein. Der Anschnitt verläuft dabei bevorzugt in Richtung der Längsmittelachse. Besonders vorteilhaft kann es sein, wenn der zylindrische Aussenmantel nur durch einen planen Anschnitt unterbrochen ist. Selbstverständlich könnte man auch mehrere solche Anschnitte auf dem Aussenmantel vorsehen. Der Anschnitt kann beispielsweise dabei derart gegenüber dem zylindrischen Aussenmantel nach innen versetzt sein, dass im Bereich des Anschnitts die umlaufende Nut für den Sprengring unterbrochen. Diese Anordnung bewirkt eine Rastverbindung, bei der der Sprengring nur in einem Teilabschnitt des gesamten Umfangs der Stifthalterung in Eingriff steht. Auf diese Weise wäre sogar eine Ausführung denkbar, bei der je nach Dimensionierung des Sprengrings die Stifthalterung verhältnismässig einfach vom Steckergehäuse demontiert werden könnte.

Ein vormontiertes Steckergehäuse für das vorgängig beschriebene Steckerteil mit einem darin eingesetzten Federelement kann auch für sich alleine vorteilhaft sein. Das Federelement kann dabei durch eine Klemmhülse gesichert sein, die in das Lager eingesetzt und durch Kraft und/oder Formschluss im Lager fixiert ist.

Ebenso kann auch eine Stifthalterung für sich alleine vorteilhaft sein. Insbesondere eignet sich eine an ein Ende eines Lichtwellenleiter-Kabels befestigte Stifthalterung dazu, bei der Verlegung eines Glasfasernetzes zu einem gewünschten Ort (z.B. zu einer Wohnung bei einem Endkonsumenten) unter Verwendung von Einblas-Verfahren eingesetzt zu werden. So kann die Stifthalterung mit einem Ende eines Lichtwellenleiter-Kabels verbunden werden und durch ein Einblas-Verfahren durch ein Röhrensystem gefördert werden. Ein anschliessendes Verschweissen oder Verspleissen des Lichtwellenleiters mit einer optischen Stecker-Komponente nach dem Verlegen entfällt somit. Die Stifthalterung muss zum Bilden einer optischen Steckverbindung lediglich in ein entsprechendes Steckerteil eingeschoben werden. Stifthalterungen mit integrierten Federn in der Art der WO 2004/001471 A1 haben sich bei Versuchen - aufgrund der vergleichsweise filigranen Ausgestaltung der Stifthalterung - als zu empfindlich für die Verwendung bei Einblas-Verfahren herausgestellt. Bei der Förderung durch die Rohrsysteme werden die Stifthalterungen mit den Steckerstiften häufig beschädigt. Die vorliegende erfindungsgemässe Stifthalterung mit fest eingebauten Steckerstiften haben sich als bedeutend robuster erwiesen. Die Stifthalterung ist in das vorgängig beschriebene Steckergehäuse einschiebbar und dort in einer Lagerstellung arretierbar. Die Stifthalterung kann dabei an ihrem Aussenmantel über eine Nut verfügen, die zum Festlegen der Lagerstellung mit einem Sprengring oder einem anderen Sicherungselement des Steckergehäuses rastend in Eingriff bringbar ist.

Ein weiterer Aspekt der Erfindung betrifft ein Verfahren zum Installieren eines Glasfasernetzes insbesondere für "Fiber to the Home"-Anwendungen, bei der ein Lichtwellenleiter-Kabel, an dessen Ende eine Stifthalterung mit einem Steckerstift und einem darin gehaltenen Lichtwellenleiter befestigt ist, durch ein Einblas-Verfahren durch Röhrensystem zu einem gewünschten Ort gefördert wird. Als "Fiber to the Home" (abgekürzt: "FTTH") bezeichnet man beispielsweise in der Telekommunikation das Verlegen von Lichtwellenleitern bis in die Wohnung eines Endkonsumenten. Selbstverständlich eignet sich das Verfahren auch für andere Anwendungsgebiete, die z.B. unter den Abkürzungen FTTL, FTTC, FTTN oder FTTB bekannt sind. Anschliessend kann zum Herstellen eines optischen Steckerteils die Stifthalterung in ein Steckergehäuse eingeschoben und dort in einer Lagerstellung rastend arretiert werden.

Weitere Vorteile und Einzelmerkmale der Erfindung ergeben sich aus der nachfolgenden Beschreibung von Ausführungsbeispielen und aus den Zeichnungen. Es zeigen:
- Figur 1: eine perspektivische Explosionsdarstellung eines erfindungsgemässen Steckerteils,
- Figur 2: das Steckerteil gemäss Figur 1 mit einer Stifthalterung und einem Federelement vor dem Einschieben bzw. Einsetzen in ein Steckergehäuse,
- Figur 3: einen Längsschnitt durch ein fertig montiertes Steckerteil gemäss Figur 1,
- Figur 4: eine perspektivische Darstellung eines vormontierten Steckergehäuses mit einem darin eingesetztem Federelement im Längsschnitt, in welches die Stifthalterung gemäss Figur 2 einsetzbar ist,
- Figur 5: einen Längsschnitt durch ein Steckerteil gemäss einem weiteren Ausführungsbeispiel,
- Figur 6: eine perspektivische Darstellung mit einem vormontierten Steckergehäuse im Längsschnitt sowie einer Stifthalterung für das Steckerteil gemäss Figur 5,
- Figur 7: das Steckerteil gemäss Figur 5 mit dem vormontierten Steckergehäuse und einer erst teilweise eingeschobenen Stifthalterung,
- Figur 8: einen Längsschnitt durch ein weiteres vormontiertes Steckergehäuse,
- Figur 9: eine Explosionsdarstellung eines Steckerteils mit dem Steckergehäuse gemäss Figur 8 für ein erfindungsgemässes Steckerteil,
- Figur 9a: eine stark vergrösserte Darstellung einer Distanzhülse sowie eines Sprengrings des Steckerteils aus Figur 9,
- Figur 10: eine Klemmhülse in perspektivischer Darstellung,
- Figur 11: einen Schnitt durch die Klemmhülse gemäss Figur 10,
- Figur 12: eine vergrösserte Darstellung des Details A aus Figur 11,
- Figur 13: einen Längsschnitt durch ein weiteres Steckerteil mit einem vormontierten Steckergehäuse und einer Stifthalterung vor dem Einschieben in das Steckergehäuse,
- Figur 14: einen Längsschnitt durch das fertig montierte Steckerteil gemäss Figur 13,
- Figur 15: eine perspektivische Darstellung eines vorderen Endes eines Lichtwellenleiter-Kabels mit der Stifthalterung gemäss Figur 13, und
- Figur 16: einen Längsschnitt durch das vordere Ende des Lichtwellenleiter-Kabels gemäss Figur 15.

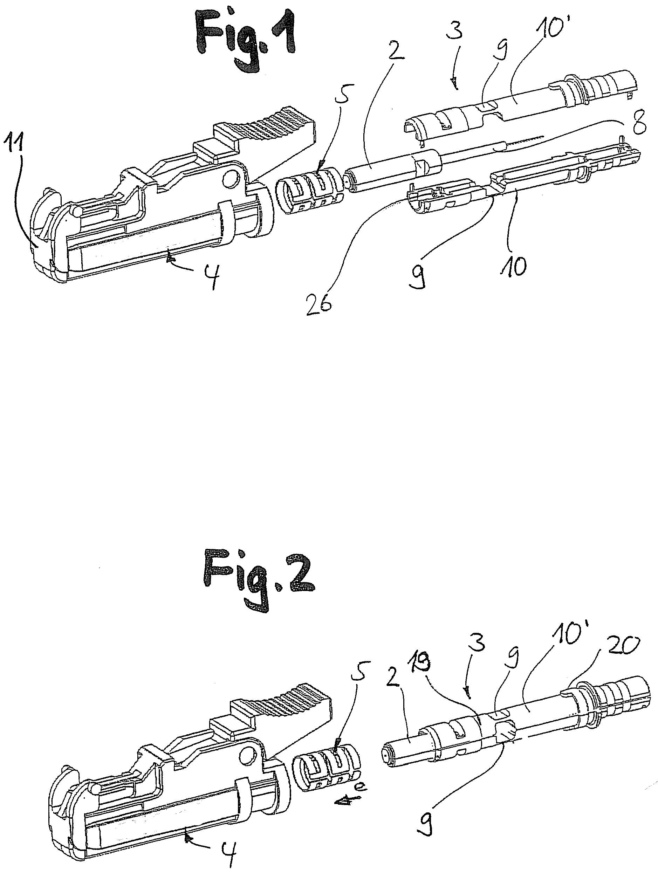

Figur 1 zeigt ein mit 1 bezeichnetes Steckerteil für eine optische Steckverbindung mit einer etwa hülsenförmigen Stifthalterung 3, die in einem Steckergehäuse einschiebbar und dort arretierbar ist. Die Aussenkonfiguration des Steckergehäuses 4 entspricht im vorliegenden Ausführungsbeispiel derjenigen des unter der Bezeichnung "E-2000™" bekannten Steckertyps des Anmelders.

Die Stifthalterung 3 ist - mit Ausnahme der Ausgestaltung der Federung - im Wesentlichen gleichartig wie die Stifthalterung aus der WO 2004/001471 ausgebildet. Allerdings ist im vorliegenden Ausführungsbeispiel die Stifthalterung nicht - wie bei der WO 2004/001471 - fest im Steckergehäuse verankert. Eine Kabelzugentlastung ist deshalb nicht vorgesehen. Die Stifthalterung 3 besteht aus zwei zusammensetzbaren Schalenteilen 10 und 10', die in einem Stiftaufnahmeabschnitt und in einem Kabelaufnahmeabschnitt 7 entlang der Längsmittelachse teilbare Mantelteile aufweisen. Die Mantelteile des Stiftaufnahmeabschnitts und des Kabelaufnahmeabschnitts sind jeweils durch ein Filmscharnier 9 gelenkig miteinander verbunden. Der Steckerstift 2 ist an seinem Aussenmantel mit zwei planparallelen Aussparungen versehen. Ein Paar korrespondierende Rippen auf der Innenseite des Stiftaufnahmeabschnitts greifen formschlüssig in diese Aussparungen ein, wodurch der Steckerstift in Richtung der Längsmittelachse fixiert ist. Weitere konstruktive Details der Ausgestaltung der Stifthalterung können aus dem oben erwähnten Dokument entnommen werden. Selbstverständlich sind auch andere Ausgestaltungen der Stifthalterung denkbar. Der feste Einbau des Steckerstiftes in die Stifthalterung könnte zum Beispiel aber auch auf andere Art und Weise gelöst werden. Selbstverständlich wäre es grundsätzlich auch denkbar, wenigstens einen Weg in Richtung der Längsmittelachse zuzulassen. Weiterhin könnte die Stifthalterung wie bei der EP 1 335 222 A1 auch aus starren, zusammensetzbaren Schalenteilen aufgebaut sein. Eine Teilung der Stifthalterung entlang der Längsachse ist für die erfindungsgemässe Lösung der gestellten Aufgabe allerdings nicht zwingend notwendig.

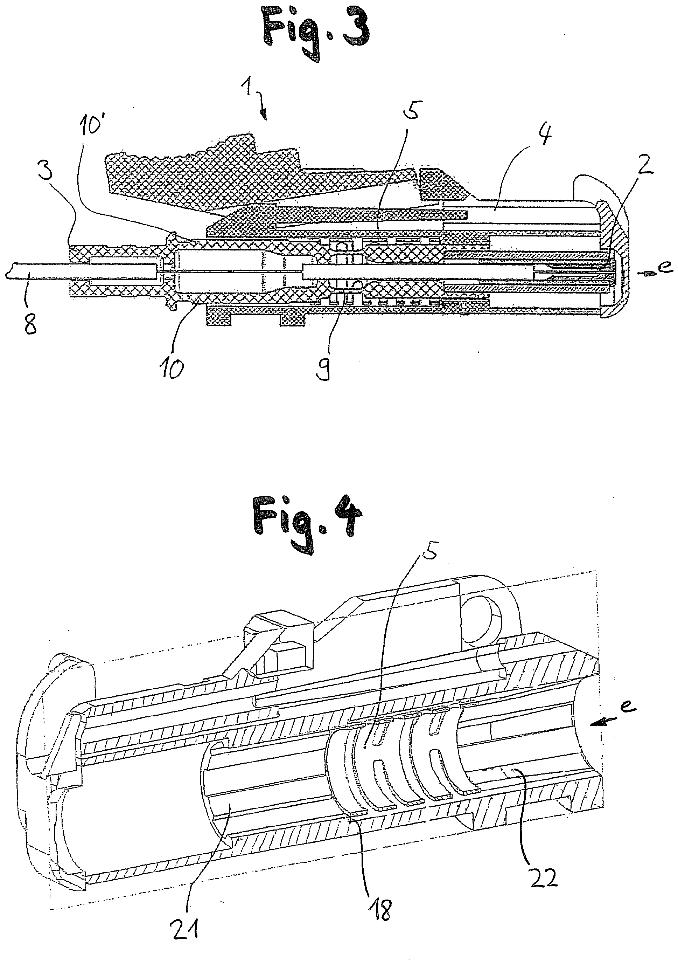

Weiterhin ist ein Federelement 5 erkennbar, das die Form eines Hohlzylinders aufweist, der skelettartig unterbrochen ist. Das Federelement 5 wird in der Regel vor dem Einschieben der Stifthalterung 3 in ein entsprechendes Lager im Steckergehäuse 4 eingesetzt. Ein derart vormontiertes Steckergehäuse ist in der nachfolgenden Figur 4 dargestellt.

Wie aus Figur 2 hervorgeht, kann eine Stifthalterung 3 in ein Steckergehäuse 4 in e-Richtung eingeschoben und dort arretiert werden. In der Stifthalterung 3 ist ein Steckerstift 2 gehalten, an welchem ein Lichtwellenleiterkabel 8 anschliesst. In diesem Zustand kann die Stiftanordnung auf einfache Art und Weise in das Steckergehäuse 4 eingeschoben und dort in einer Lagerstellung arretiert werden.

Aus der Schnittdarstellung gemäss Figur 4 erkennt man, dass die Schulter 18 des Lagersegments 21 einen Anschlag für das Federelement 5 bildet. Aus Figur 4 ergibt sich der Sitz des Federelements 5 im Steckergehäuse 4 in der Ruhestellung im Lager. Das Federelement 5 ist in einem Hohlraum im Gehäuseinnern des Steckergehäuses 4 gelagert. Das vordere Ende des Federelements 5 ist auf einen in Einschieberichtung wirkenden Anschlag für das Federelement abgestützt. Dieser Anschlag ist als teilweise umlaufende Schulter ausgestaltet und wird ersichtlicherweise durch einzelne über den Umfang verteilte, im Innenmantel des Steckergehäuses angeordnete Schultersegmente 18 gebildet. Die Schultersegmente 18 sind durch in Längsrichtung verlaufende Rippen 21 vorgegeben. Auf der gegenüberliegenden Seite, d.h. beim kabelseitigen Ende des Federelements 5, ist es ebenfalls durch Schultersegmente abgestützt, die einen Anschlag für das Federelement in die Gegenrichtung bilden. Auch hier sind die Schultersegmente durch einzelne im Innenmantel des Steckergehäuses angeordnete Rippen 22 vorgegeben, die über den Umfang verteilt sind.

Das vordere Ende des Federelements 5 ist in Einschieberichtung e durch eine umlaufende Schulter 19 an der Stifthalterung 3 abgestützt (Fig. 2). Aber auch die Schulter 18 des Steckergehäuses 4 bildet einen Anschlag für das vordere Ende des Federelements 5 bei einer Verschiebung in Einschieberichtung e. Kabelseitig bildet die Schulter des Steckergehäuses 4 einen Anschlag für das Federelement 5 in Bezug auf die entgegengesetzte Richtung.

Wie Figur 4 zeigt, sind die Schultern bzw. Schultersegmente jeweils durch die Enden der jeweiligen Rippen 21 und 22 vorgegeben. Zwischen den Schultern bzw. den Schultersegmenten ist ein Hohlraum für das Lager erkennbar, in dem das Federelement aufnehmbar ist. Aus Figur 4 geht hervor, dass der Hohlraum derart dimensioniert ist, dass zwischen dem Federelement 5 und dem Innenmantel des Steckergehäuses 4 ein Spaltraum sich ausbildet. Dieser Spaltraum dient dazu, die radiale Ausdehnung des Federelements beim Einschiebe-Vorgang zuzulassen (vgl. auch Fig. 3).

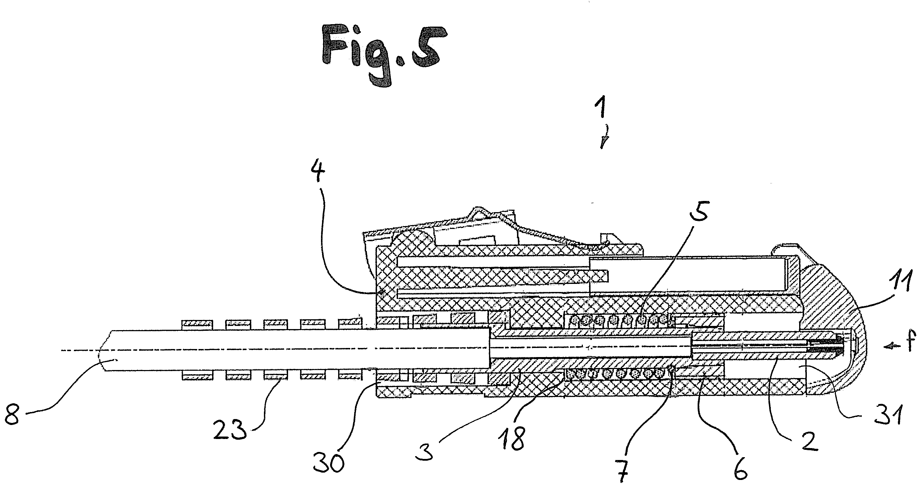

In Figur 5 ist ein Steckerteil 1 gezeigt, bei dem das Lager für das Federelement 5 einerseits durch die Schulter 18 und andererseits durch ein in das Lager einsetzbares hülsenförmiges Sicherungselement 6 vorgegeben ist. Dieses separate Sicherungselement ist durch Kraft- und/oder Formschluss im Bereich des Federaufnahmeabschnitts des Lagers fixiert. Ein Federaufnahmeabschnitt für das Federelement 5 erstreckt sich von der steckerseitigen Steckeröffnung 31 in f-Richtung bis zur umlaufenden Schulter 18. Die Lagerinnenseite im Bereich des Federaufnahmeabschnitts ist zylindrisch ausgebildet. Das Sicherungselement 6 wird über die steckerseitige Öffnung 31 des Steckergehäuses 4 eingeschoben. Die Steckeröffnung 31 in Figur 5 ist durch einen Schutzdeckel 11 verschlossen, der das vordere Ende des Steckerstifts 2 schützt. Das Steckergehäuse 4 entspricht im vorliegenden Ausführungsbeispiel derjenigen des unter der Bezeichnung "F-3000™" bekannten Steckertyps des Anmelders. Die Aussenkontur des Steckergehäuses kann selbstverständlich verschiedenartig ausgebildet sein, insbesondere soll diese gängigen Steckertypen wie E-2000, FC, SC, etc. entsprechen.

In Figur 5 ist ein mit 7 bezeichnetes Rastmittel erkennbar, mit dessen Hilfe die ins Steckergehäuse 4 eingeschobene Stifthalterung 3 rastend in einer Lagerstellung arretierbar ist. Das Rastmittel, das vorzugsweise als Sprengring 7 ausgestaltet ist, liegt am kabelseitigen Ende des hülsenförmigen Sicherungselements 6 an. An den Sprengring 7 schliesst weiter das als Schraubendruckfeder ausgebildete Federelement an. Am kabelseitigen Ende der Stifthalterung 3 ist ein Knickschutz 23 angeordnet, der teilweise in die kabelseitige Öffnung 30 des Steckergehäuses hineinreicht.

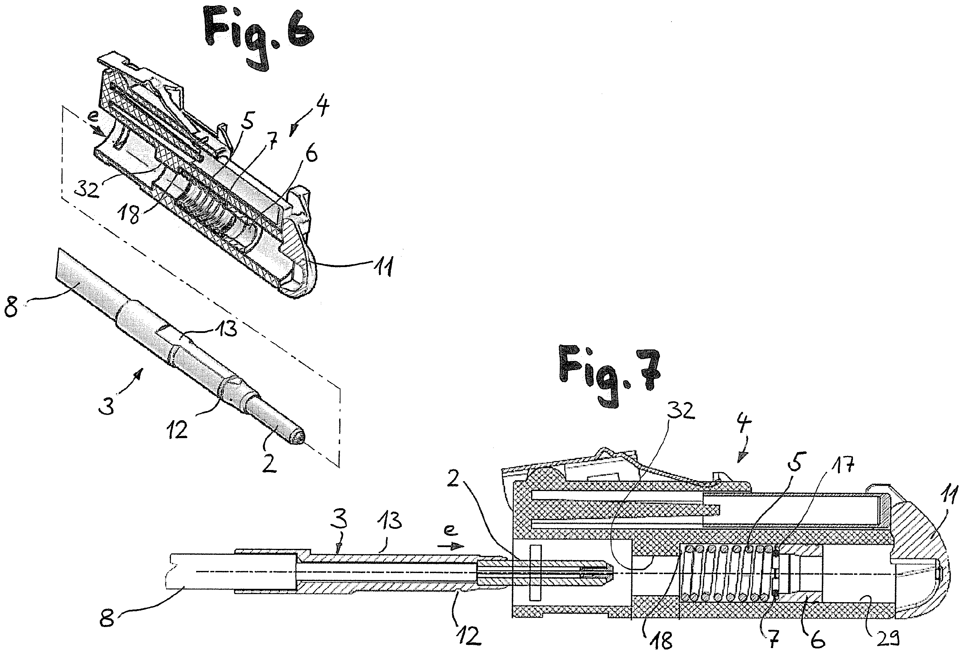

In Figur 6 ist in perspektivischer Darstellung nochmals der Aufbau des Steckerteils ersichtlich. So geht aus Figur 6 insbesondere hervor, dass die Stifthalterung 3 über einen (einzigen) planen Anschnitt 13 verfügt, der den zylindrischen Aussenmantel der Stifthalterung unterbricht. Dieser Anschnitt 13 verläuft in Richtung der Längsmittelachse. Als Gegenstück für den Anschnitt 13 ist im Lager des Steckergehäuses 4 ein entsprechend komplementär ausgestalteter planer Innenabschnitt 32 angeordnet. Auf dies Weise ist einerseits eine Verdrehsicherung sowie andererseits eine winkelgenaue Positionierung des Steckerstifts 2 bzw. der Stifthalterung 3 im Steckergehäuse 4 sichergestellt. Am Aussenmantel der Stifthalterung 3 ist eine Nut 12 angeordnet, die für die Rastverbindung mit dem Sprengring 7 in Eingriff bringbar ist. Das Steckergehäuse 4 besteht wenigstens im Bereich des Federabschnitts der Lagerinnenseite 2 aus Kunststoff. Die Klemmhülse 6 besteht aus Metall, wobei bevorzugt ein vergleichsweise weiches Metall wie Bronze oder Neusilber verwendet wird.

Figur 7 zeigt, dass die Nut 12 im Bereich des planen Anschnitts 13 unterbrochen ist, sodass in diesem Bereich die Nut unterbrochen ist bzw. hier keine nutartige Einbuchtung vorliegt. Das Sicherungselement 6 ist als Klemmhülse ausgestaltet, die einen ausreichend festen Sitz in der zylindrisch ausgestalteten Lagerinnenseite gewährleistet. An dem dem Sprengring zugewandten Ende der Klemmhülse 6 ist eine Einbuchtung 17 erkennbar, in weleher der Sprengring 7 teilweise aufgenommen ist. Die Einbuchtung 17 ist dabei derart dimensioniert, dass sie eine radiale Aufweitung des Sprengrings 7 beim Einschiebevorgang (Einschieberichtung ist durch den Pfeil e angedeutet) der Stifthalterung in das Steckergehäuse 4 zulässt.

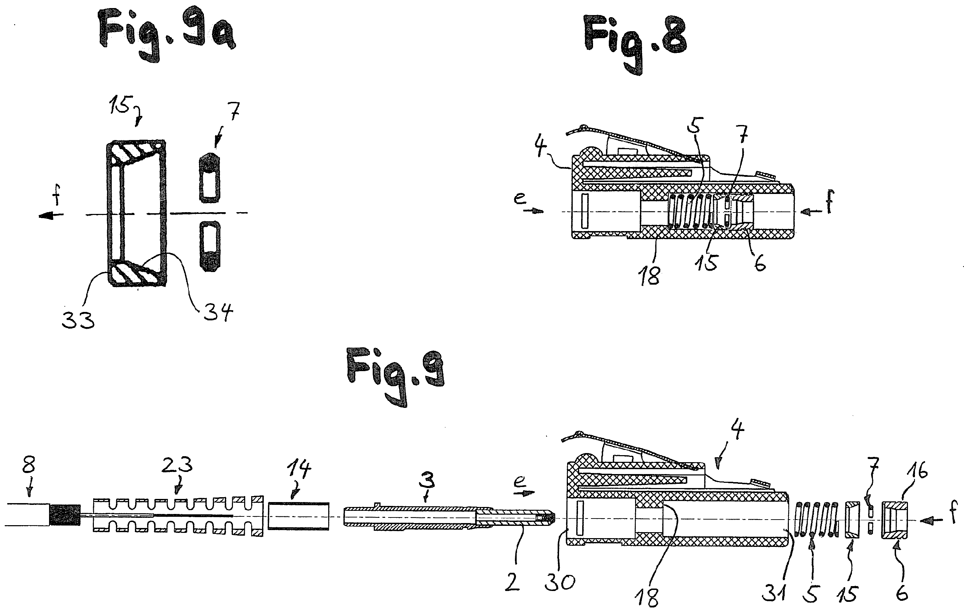

Das vormontierte Steckergehäuse 4 gemäss Figur 8 unterscheidet sich - neben einer leicht modifizierten Aussenkonfiguration - im Wesentlichen vom vorhergehenden Ausführungsbeispiel dadurch, dass im Lager zusätzlich eine Distanzhülse 15 vorgesehen ist. Die Distanzhülse 15 ist verschiebbar gelagert und ist zwischen dem Sprengring 7 und dem Federelement 5 angeordnet. Die Verwendung einer Distanzhülse hat den Vorteil, dass die Verschiebung der Stifthalterung unter Einwirkung der Federkraft des Federelements 5 präzise erfolgen kann. Durch Anpassen der Länge der Distanzhülse (Länge: Ausdehnung bezogen auf Längsmittelachse) kann die gewünschte Vorspannung genau eingestellt werden.

Aus Figur 9 sind die wesentlichen Komponenten eines Steckerteils einzeln dargestellt. Hieraus geht etwa hervor, dass die Stifthalterung 3 mit dem Steckerstift 2, über die kabelseitige Steckeröffnung 30 in Einschieberichtung e in das Steckergehäuse 4 eingeschoben wird. Die Komponenten für die rastende und federnde Lagerung der Stifthalterung 3, d.h. das Federelement 5, die Distanzhülse 15, der Sprengring 7 sowie schliesslich die Klemmhülse 6 werden von der entgegengesetzten Seite her in die Gegenrichtung in das Steckergehäuse 4 eingesetzt. Diese Komponenten 5, 15, 7 und 6 werden damit also über die steckerseitige Steckeröffnung 31 in f-Richtung in das entsprechende Lager des Steckergehäuses 4 eingesetzt. Die Vorspannung des Federelements 5 ist durch die Verwendung einer Klemmhülse variabel einstellbar, da je nachdem wie tief die Klemmhülse im Lager eingesetzt ist oder je nach Länge der Distanzhülse 15, die Schraubendruckfeder 5 nicht oder verschieden stark zusammengedrückt wird.

Konstruktive Details der Distanzhülse 15 sind in der stark vergrösserten Darstellung in Figur 9a erkennbar. Im Bereich der dem Sprengring 7 zugewandten Seite weist die Distanzhülse innen einen konischen Abschnitt 34 auf, der in f-Richtung sich verjüngt. Der konische Abschnitt 34 bewirkt, dass bei Ausübung einer Zugkraft auf ein (nicht gezeigtes) Lichtwellenleiter-Kabel der Sprengring 7 auf den konischen Abschnitt 34 aufläuft (bei Zug verschiebt sich die Stifthalterung und damit auch der Sprengring 7 in f-Richtung) und dass dadurch der Sprengring 7 radial sich leicht zusammenzieht, wodurch die Rastverbindung zur Stifthalterung sich verstärkt. Mittels des konischen Abschnitts kann ein ungewünschtes Herausziehen (bzw. Demontage) der Stifthalterung aus dem Steckergehäuse auf einfache Art und Weise verhindert werden. Im Bereich der dem Sprengring 7 gegenüberliegenden Seite bzw. der dem Federelement zugewandten Seite weist die Distanzhülse 15 stirnseitig eine Auflagefläche 33 für das entsprechende Ende des Federelements auf.

Figur 9 zeigt weiterhin, dass am kabelseitigen Ende der Stifthalterung 3 eine Krimphülse 14 zur Befestigung des LWL-Kabels 8 in der Stifthalterung 3 vorgesehen ist. Der Knickschutz 23 wird anschliessend darüber gestülpt.

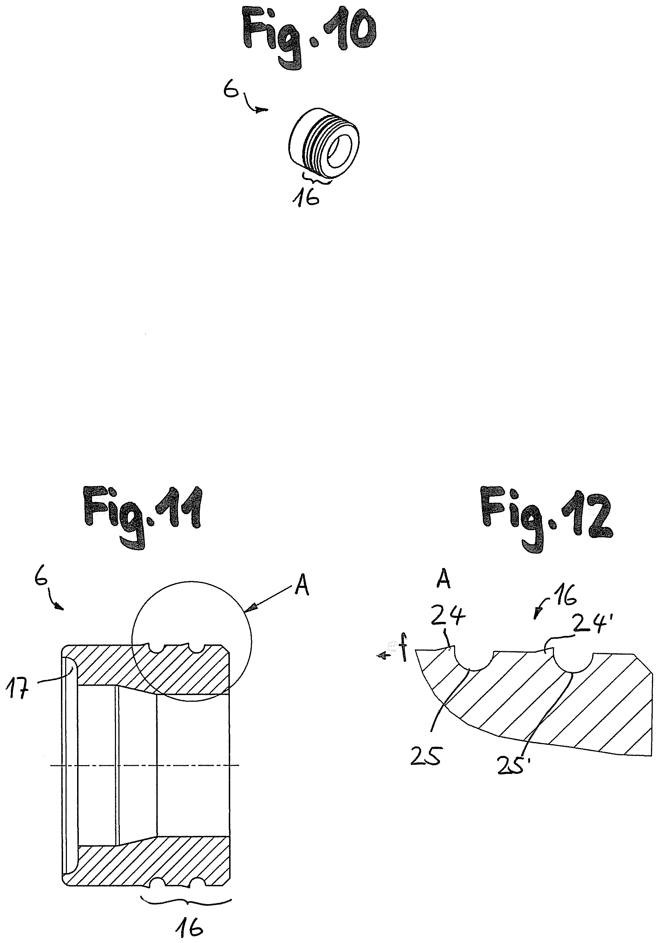

Auf dem Aussenmantel der Klemmhülse 6 sind gemäss Figur 10 umlaufende Erhebungen und Aussparungen in Form einer Verzahnung 16 angeordnet. Die Ausgestaltung der Verzahnung 16 ist in der Schnittdarstellung gemäss Figur 11 vergrössert dargestellt. Weiter ist in Figur 11 eine nutartige, umlaufende Einbuchtung 17 zur Aufnahme oder Anlage des (hier nicht gezeigten) Sprengrings erkennbar. Wie bereits anhand Figur 9 erwähnt, weist die Einbuchtung 17 in radialer Richtung ein Übermass auf, so dass sie eine Aufweitung des Sprengrings zulässt. An die Einbuchtung 17 schliesst ein erster zylindrischer und dann ein konischer Abschnitt an. Ein zweiter zylindrischer Abschnitt, der einen kleineren Durchmesser als der erste Abschnitt aufweist, dient als Gleitfläche für den korrespondierenden Aussenmantel der Stifthalterung (nicht gezeigt, vgl. jedoch z.B. Figur 5).

Figur 12 zeigt in einer stark vergrösserten Ansicht die Ausgestaltung der Verzahnung 16 der Klemmhülse. Diese besteht ersichtlicherweise aus zwei hintereinander angeordneten Zähnen 24 und 24', wobei - bezogen auf die Einsetz-Richtung f - jeweils hinter jedem Zahn eine nutartige Hinterschneidung 25 bzw. 25' anschliesst. Die Zähne 24 bzw. 24' weisen eine leicht konisch ausgestaltete Auflaufflanke auf (der Neigungswinkel gegenüber der Längsmittelachse beträgt z.B. zwischen 2 und 15°). Am hinteren Ende der Auflaufflanke der Zähne 24, 24' folgt die Hinterschneidung 25, 25', die zuerst etwa senkrecht zur Längsmittelachse verläuft. Die Hinterschneidungen 25, 25' sind ersichtlicherweise etwa halbkreisförmig ausgestaltet. Mittels der Verzahnung ist ein sicherer Sitz gewährleistet, da die Erhebungen 24 und Aussparungen 25 durch plastische Verformung formschlüssig in die Lagerinnenseite des Lagers eingreifen. Selbstverständlich sind aber auch andere Konfigurationen der Zähne und/oder Hinterschneidungen vorstellbar.

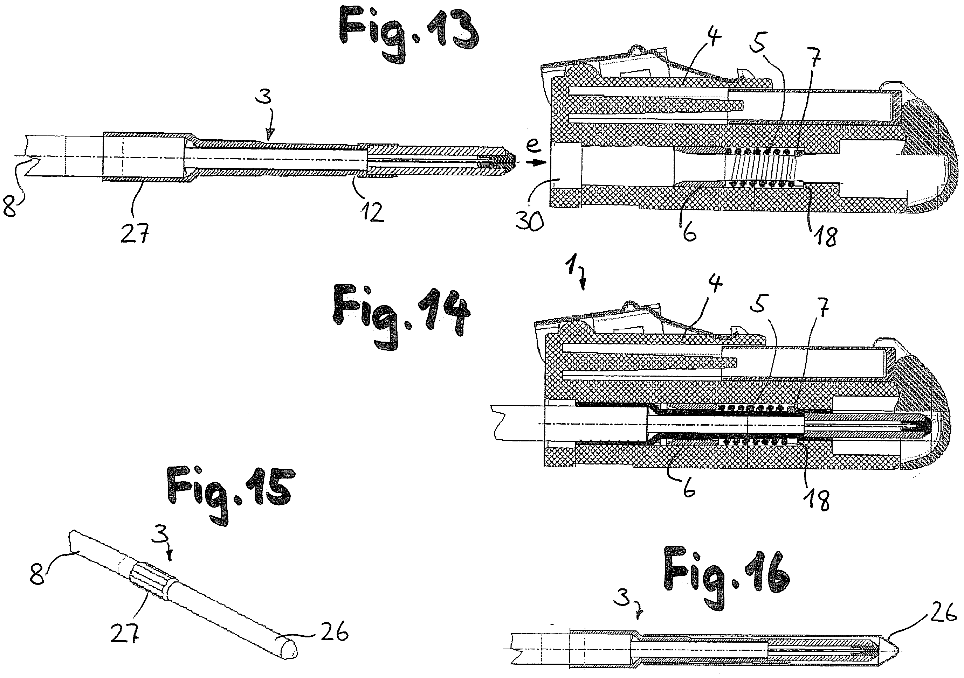

Die Figuren 13 und 14 zeigen eine weitere Ausführungsform eines Steckerteils 1. Hier werden jedoch die Komponenten (6, 5, 7) für die rastende und federnde Lagerung der Stifthalterung 3 über die kabelseitige Steckeröffnung 30 in Einschieberichtung e in das Steckergehäuse eingesetzt (d.h. von hinten, anstatt von vorne). Ein weiterer Unterschied zu den Ausführungen gemäss den Figur 5 bis 9 ist, dass der Sprengring 7 nicht der Klemmhülse 6 zugeordnet ist. Wie etwa Figur 13 zeigt, liegt der Sprengring 7 wenigstens in der Ruhestellung an der umlaufenden Schulter 18 des Lagers des Steckergehäuses 4 an. Die Klemmhülse 6 könnte auch bei dieser Ausführung mit einer Verzahnung (vgl. Figuren 10 bis 12) versehen sein. Selbstverständlich wäre es auch hier denkbar, eine Distanzhülse in der Art des Ausführungsbeispiels gemäss Figur 8 zu verwenden. Aus den Figuren 13 und 14 ist sodann erkennbar, dass der Sprengring 7 im Querschnitt nicht zwingend kreisförmig ausgestaltet sein muss.

In Figur 15 ist eine an einem Lichtwellenleiter-Kabel 8 befestigte Stifthalterung 3 gezeigt. Die Stifthalterung 3 weist einen polygonartig ausgestalteten Positionierabschnitt 27 (Mehrkant) auf, der zur Verdrehsicherung in einer komplementären Positionieranordnung im Steckergehäuse passgenau aufnehmbar ist. Weiter ist eine hülsenförmige Schutzkappe 26 erkennbar. Aus der Schnittdarstellung gemäss Figur 16 geht hervor, dass die Schutzkappe 26 über das vordere Ende der Stifthalterung gestülpt ist und so den Steckerstift 2 mit dem darin gehaltenen Lichtwellenleiter schützt. Zum Installieren eines Glasfasernetzes kann dieses Lichtwellenleiter-Kabel, an dessen Ende die Stifthalterung 3 befestigt ist, verwendet werden. Das Kabel 8 wird durch ein Einblas-Verfahren durch ein Röhrensystem gefördert. Wegen der soliden Bauweise der Stifthalterung mit dem darin gehaltenen Steckerstift und dank der Schutzkappe 26 kann die Förderung beim Einblasvorgang ohne Gefahr einer Beschädigung erfolgen. Nach Erreichen der gewünschten Position bei einem Endkonsumenten wird anschliessend zum Herstellen eines optischen Steckerteils die Stifthalterung 3 in ein Steckergehäuse eingeschoben und dort in einer Lagerstellung rastend arretiert.

## Patentansprüche

1. Vormontiertes Steckergehäuse (4) für ein Steckerteil (1) für eine optische Steckverbindung mit einer kabelseitigen Öffnung (30) und einer steckerseitigen Öffnung (31), wobei eine Stifthalterung (3), in der ein Steckerstift (2) mit einem sich über eine Längsmittelachse (L) erstreckenden Lichtwellenleiter gehalten ist, über die kabelseitige Öffnung (30) in das Steckergehäuse (4) einschiebbar und dort in einer Lagerstellung arretierbar ist, und wobei die Stifthalterung (3) mit dem Steckerstift (2) mit Hilfe eines Federelement (5) axial federnd im Steckergehäuse (4) gehalten ist, **dadurch gekennzeichnet, dass** das Federelement (5) ein separates Bauteil ist, das in einem Lager zur Aufnahme des Federelements im Steckergehäuse (4) eingesetzt ist, wobei im Lager eine wenigstens teilweise umlaufende Schulter (18) zur Begrenzung des Federwegs in eine Richtung angeordnet ist und das Federelement (5) bezogen auf die entgegengesetzte Richtung durch ein Sicherungselement (6) im Lager gesichert ist, das in das Lager einsetzbar ist und durch Kraft- und/oder Formschluss im Lager fixiert ist, wobei die Lagerstellung der Stifthalterung (3) im Steckergehäuse (4) durch Rastmittel (7) vorgegeben ist, wobei das Rastmittel (7) auf der steckerseitigen Seite des Federelementes (5) verschiebbar im Lager gelagert ist.

2. Steckergehäuse (4) nach Anspruch 1, **dadurch gekennzeichnet, dass** Sicherungselement (6) eine Klemmhülse ist.

3. Steckergehäuse (4) nach Anspruch 2, **dadurch gekennzeichnet, dass** die Klemmhülse über die kabelseitige Öffnung (30) in Einschieberichtung (e) in das Lager einsetzbar ist.

4. Steckergehäuse (4) nach Anspruch 2, **dadurch gekennzeichnet, dass** die Klemmhülse über die steckerseitige Öffnung (31) in Gegenrichtung (f) zur Einschieberichtung (e) einsetzbar ist.

5. Steckergehäuse (4) Anspruch 3 oder 4, **dadurch gekennzeichnet, dass** die Klemmhülse Erhebungen und/oder Aussparungen enthält, welche durch plastische Verformung formschlüssig in die Lagerinnenseite (29) des Lagers eingreifen.

6. Steckergehäuse (4) nach einem der Ansprüche 3 bis 5, **dadurch gekennzeichnet, dass** das Steckergehäuse (4) wenigstens im Bereich Lagerinnenseite (29) aus Kunststoff und die Klemmhülse aus Metall besteht.

7. Steckergehäuse (4) nach einem der Ansprüche 1 bis 6, **dadurch gekennzeichnet, dass** ein Sprengring als Rastmittel (7) im Lager angeordnet.

8. Steckergehäuse (4) nach Anspruch 7, **dadurch gekennzeichnet, dass** zwischen Sprengring und Federelement (5) eine axial im Lager verschiebbare Distanzhülse (15) angeordnet ist.

9. Steckergehäuse (4) nach einem der Anprüche 3 bis 8, **dadurch gekennzeichnet, dass** die Klemmhülse oder die Distanzhülse (15) eine umlaufende Einbuchtung (17) oder umlaufende Nut (12) zur Aufnahme oder Anlage des Sprengrings aufweist, welche derart dimensioniert ist, dass sie eine Aufweitung des Sprengrings beim Einschiebervorgang der Stifthalterung (3) in das Steckergehäuse (4) zum Herstellen der Lagerstellung zulässt.

10. Steckerteil (1) für eine optische Steckverbindung mit wenigstens einer Stifthalterung (3), in der ein Steckerstift (2) zur Aufnahme eines sich über eine Längsmittelachse (L) erstreckenden Lichtwellenleiters gehalten ist und mit einem Steckergehäuse (4) nach einem der Ansprüche 1 bis 9, wobei die Stifthalterung (3) über eine Nut (12) verfügt, die zum Festlegen der Lagerstellung mit dem Rastmittel (7) rastend in Eingriff bringbar ist.

11. Steckerteil nach Anspruch 10, **dadurch gekennzeichnet, dass** die Stifthalterung (3) über einen Positionierabschnitt (13) und das Steckergehäuse (4) über eine mit dem Positionierabschnitt (13) in Wirkverbindung stehenden Positionieranordnung verfügt, wodurch sie verdrehgesichert im Lager des Steckergehäuses (4) gehalten ist.

12. Steckerteil nach Anspruch 10 oder 11, **dadurch gekennzeichnet, dass** die Stifthalterung (3) im Wesentlichen rotationssymmetrisch ausgebildet ist, wobei jedoch zum Bilden einer Verdrehsicherung wenigstens ein zylindrischer Aussenmantel durch einen vorzugsweise planen Anschnitt (13) unterbrochen ist und dass das Steckergehäuse (4) abschnittsweise innenseitig komplementär ausgestaltet ist.

13. Verfahren zum Installieren eines Glasfasernetzes, bei der ein Lichtwellenleiter-Kabel, an dessen Ende eine Stifthalterung (3) mit einem Steckerstift (2) und einem darin gehaltenen Lichtwellenleiter befestigt ist, durch ein Einblas-Verfahren durch ein Röhrensystem gefördert wird, wobei die Stifthalterung (3) an ihrem Aussenmantel über eine Nut (12) verfügt, die zum Festlegen einer Lagerstellung mit einem Rastmittel (7) eines Steckergehäuses (4) rastend in Eingriff bringbar ist, und dass anschliessend zum Herstellen eines optischen Steckerteils gemäss einem der Ansprüche 10 bis 12 die Stifthalterung (3) in ein Steckergehäuse (4) gemäss einem der Ansprüche 1 bis 9 eingeschoben und dort in der Lagerstellung rastend arretiert wird.

## Claims

1. Preassembled plug housing (4) for a plug part (1) for an optical plug connection, having a cable-side aperture (30) and a plug-side aperture (31), wherein a pin holder (3), in which a plug pin (2) having an optical fibre extending over a longitudinal centre axis (L) is held, is able to be inserted into the plug housing (4) through the cable-side aperture (30) and stopped there in a bearing position, and wherein the pin holder (3) is held to the plug pin (2) in the plug housing (4) in an axially sprung manner with the aid of a spring element (5), **characterized in that** the spring element (5) is a separate component that is inserted in a receptacle for receiving the spring element in the plug housing (4), wherein an at least partly circumferential shoulder (18) for limiting the spring travel in one direction is arranged in the receptacle, and the spring element (5) is secured in the receptacle with respect to the opposing direction by a securing element (6) that is able to be inserted into the receptacle and is fixed in the receptacle through a force-type connection and/or positive-locking connection, wherein the bearing position of the pin holder (3) in the plug housing (4) is predefined by latching means (7), wherein the latching means (7) is mounted on the plug-side side of the spring element (5) so as to be able to move in the receptacle.

2. Plug housing (4) according to Claim 1, **characterized in that** the securing element (6) is a clamp sleeve.

3. Plug housing (4) according to Claim 2, **characterized in that** the clamp sleeve is able to be inserted into the receptacle in an insertion direction (e) through the cable-side aperture (30).

4. Plug housing (4) according to Claim 2, **characterized in that** the clamp sleeve is able to be inserted in the opposite direction (f) to the insertion direction (e) through the plug-side aperture (31).

5. Plug housing (4) according to Claim 3 or 4, **characterized in that** the clamp sleeve contains elevations and/or recesses that engage in a formfitting manner in the receptacle inner side (29) of the receptacle through plastic deformation.

6. Plug housing (4) according to one of Claims 3 to 5, **characterized in that** the plug housing (4), at least in the region of the receptacle inner side (29), consists of plastic, and the clamp sleeve consists of metal.

7. Plug housing (4) according to one of Claims 1 to 6, **characterized in that** a circlip is arranged in the receptacle as latching means (7).

8. Plug housing (4) according to Claim 7, **characterized in that** a spacer sleeve (15) that is able to move axially in the receptacle is arranged between the circlip and the spring element (5).

9. Plug housing (4) according to one of Claims 3 to 8, **characterized in that** the clamp sleeve or the spacer sleeve (15) has a circumferential indentation (17) or circumferential groove (12) for receiving or bearing the circlip, which indentation or groove is dimensioned such that it permits an expansion of the circlip during the procedure of inserting the pin holder (3) into the plug housing (4) in order to produce the bearing position.

10. Plug part (1) for an optical plug connection, having at least one pin holder (3) in which a plug pin (2) for receiving an optical fibre extending over a longitudinal centre axis (L) is held, and having a plug housing (4) according to one of Claims 1 to 9, wherein the pin holder (3) has a groove (12) that is able to be brought into latching engagement with the latching means (7) in order to define the bearing position.

11. Plug part according to Claim 10, **characterized in that** the pin holder (3) has a positioning section (13) and the plug housing (4) has a positioning arrangement operationally connected to the positioning section (13), as a result of which said pin holder is held in the receptacle of the plug housing (4) in a non-rotatable manner.

12. Plug part according to Claim 10 or 11, **characterized in that** the pin holder (3) is designed so as to be substantially rotationally symmetrical, wherein, to form a rotation lock, at least one cylindrical outer sheath is however interrupted by a preferably planar section (13), and **in that** the plug housing (4) is internally designed so as to be sectionally complementary.

13. Method for installing a fibre-optic network, in which a fibre-optic cable, at whose end a pin holder (3) is fastened to a plug pin (2) and an optical fibre held therein, is conveyed through a pipe system by an injection method, wherein the pin holder (3) has a groove (12) on its outer sheath that is able to be brought into latching engagement with a latching means (7) of a plug housing (4) in order to define a bearing position, and in that, to produce an optical plug part according to one of Claims 10 to 12, the pin holder (3) is then inserted into a plug housing (4) according to one of Claims 1 to 9 and is stopped there in a latching manner in the bearing position.

## Revendications

1. Boîtier de connecteur pré-monté (4) destiné à un élément de connecteur (1) destiné à une connexion optique, le boîtier de connecteur comprenant une ouverture côté câble (30) et une ouverture côté connecteur (31), un support de broche (3), dans lequel est maintenue une broche de connecteur (2) pourvue d'un guide d'onde optique s'étendant sur un axe central longitudinal (L), pouvant être inséré dans le boîtier de connecteur (4) par l'ouverture côté câble (30) et pouvant être bloqué dans celui-ci dans une position de montage, et le support de broche (3) pourvu de la broche de connecteur (2) étant maintenu axialement de manière élastique dans le boîtier de connecteur (4) à l'aide d'un élément à ressort (5), **caractérisé en ce que** l'élément à ressort (5) est un composant séparé qui est inséré dans un logement destiné à recevoir l'élément à ressort dans le boîtier de connecteur (4), un épaulement (18) au moins partiellement circulaire étant disposé dans le logement pour limiter le débattement du ressort dans un sens et l'élément à ressort (5) étant fixé dans le logement dans le sens opposé par un élément de fixation (6) qui peut être inséré dans le logement et qui est fixé dans le logement par une liaison en force et/ou par complémentarité de formes, la position de montage du support de broche (3) dans le boîtier de connecteur (4) étant prédéterminée par des moyens d'encliquetage (7), le moyen d'encliquetage (7) étant monté de manière coulissante dans le logement du côté connecteur de l'élément à ressort (5).

2. Boîtier de connecteur (4) selon la revendication 1, **caractérisé en ce que** l'élément de fixation (6) est un manchon de serrage.

3. Boîtier de connecteur (4) selon la revendication 2, **caractérisé en ce que** le manchon de serrage peut être inséré dans le logement dans un sens d'introduction (e) par l'ouverture côté câble (30).

4. Boîtier de connecteur (4) selon la revendication 2, **caractérisé en ce que** le manchon de serrage peut être inséré dans le sens opposé (f) au sens d'insertion (e) par l'ouverture côté connecteur (31).

5. Boîtier de connecteur (4) selon la revendication 3 ou 4, **caractérisé en ce que** le manchon de serrage contient des saillies et/ou des évidements qui s'engagent par complémentarité de formes, par déformation plastique, dans le côté intérieur (29) du logement.

6. Boîtier de connecteur (4) selon l'une des revendications 3 à 5, **caractérisé en ce que** le boîtier de connecteur (4) est en matière synthétique au moins du côté intérieur (29) du logement et le manchon de serrage est en métal.

7. Boîtier de connecteur (4) selon l'une des revendications 1 à 6, **caractérisé en ce qu'**un circlips est disposé comme moyen d'encliquetage (7) dans le logement.

8. Boîtier de connecteur (4) selon la revendication 7, **caractérisé en ce qu'**un manchon d'écartement (15), pouvant coulisser axialement dans le logement, est disposé entre le circlips et l'élément à ressort (5).

9. Boîtier de connecteur (4) selon l'une des revendications 3 à 8, **caractérisé en ce que** le manchon de serrage ou le manchon d'écartement (15) comporte une rainure périphérique (17) ou une gorge périphérique (12) qui est destinée à recevoir ou supporter le circlips et qui est dimensionnée de manière à permettre une extension du circlips lors du processus d'insertion du support de broche (3) dans le boîtier de connecteur (4) afin de réaliser la position de montage.

10. Élément de connecteur (1) destiné à une connexion optique et comprenant au moins un support de broche (3), dans lequel est maintenue une broche de connecteur (2) destinée à recevoir un guide d'ondes optique s'étendant sur un axe central longitudinal (L), et un boîtier de connecteur (4) selon l'une des revendications précédentes 1 à 9, le support de broche (3) disposant d'une gorge (12) qui peut être amenée en engagement avec le moyen d'encliquetage (7) pour fixer la position de montage.

11. Élément de connecteur selon la revendication 10, **caractérisé en ce que** le support de broche (3) dispose d'une partie de positionnement (13) et le boîtier de connecteur (4) dispose d'un dispositif de positionnement en liaison fonctionnelle avec la partie de positionnement (13) de manière à être maintenu sans pouvoir tourner dans le logement du boîtier de connecteur (4).

12. Élément de connecteur selon la revendication 10 ou 11, **caractérisé en ce que** le support de broche (3) est conçu pour être sensiblement à symétrie de révolution, au moins une gaine extérieure cylindrique étant cependant interrompue par une entaille (13), de préférence plane, pour former un dispositif antirotation et le boîtier de connecteur (4) étant conçu par endroits de manière complémentaire du côté intérieur.

13. Procédé d'installation d'un réseau de fibres optiques, un câble à guide d'ondes optiques, à l'extrémité duquel est fixé un support de broche (3) pourvu d'une broche de connecteur (2) et d'un guide d'ondes optiques maintenu à l'intérieur, étant acheminé à travers un système de petits tubes par un procédé de soufflage, le support de broche (3) disposant sur son enveloppe extérieure d'une gorge (12) qui peut être amenée en engagement par encliquetage avec un moyen d'encliquetage (7) d'un boîtier de connecteur (4) pour fixer une position de montage, puis le support de broche (3) étant inséré dans un boîtier de connecteur (4) selon l'une des revendications 1 à 9, où il est bloqué dans la position de montage, pour réaliser un élément de connecteur optique selon l'une des revendications 10 à 12.
